# EUROPEAN PATENT SPECIFICATION

(11) **EP 0 342 685 B1**
(45) Date of publication and mention of the grant of the patent: **13.04.1994**
(21) Application number: 89109020.1
(22) Date of filing: 19.05.1989
(51) Int. Cl.: A01N 25/28, B01J 13/02

(54) **Microencapsulating composition and kit; and process for producing microcapsules**
Zusammenzetzung und Kit zum Mikroverkapseln und Verfahren zur Herstellung von Mikrokapseln
Composition et objet destinés à la micro-encapsulation, procédé de préparation de microcapsules

(30) Priority: 20.05.1988 JP 121954/88
(43) Date of publication of application: 23.11.1989
(73) Proprietor: Chugai Seiyaku Kabushiki Kaisha, Tokyo (JP); DAI-ICHI KOGYO SEIYAKU CO., LTD., Shimogyo-ku Kyoto (JP)
(72) Inventor: Yoshimoto, Masahiro, Tokyo (JP); Kojima, Shinya, Komae-shi Tokyo (JP); Kataoka, Hironori, Ikoma-gun Nara-ken (JP); Jinno, Kazuhito, Kyoto-shi Kyoto (JP)
(74) Representative: VOSSIUS & PARTNER

(56) References cited:
- EP-A- 0 148 769
- US-A- 4 353 962
- US-A- 4 681 806
- US-A- 4 722 838

## Description

The present invention relates to a microencapsulating composition. More particularly, the present invention relates to a microencapsulating composition suitable for long-term storage that may be used in forming microcapsules of a drug such as a commercially available agrochemical by adding said composition to a spray liquid together with said drug and mixing the components under agitation. The present invention also relates to a microencapsulating composition that further contains a component to be microencapsulated, as well as a microencapsulating kit consisting of the two parts of the microencapsulating composition.

Microencapsulation technology has been receiving increasing interest because of the several advantages it offers, e.g., the potential for modifying the apparent nature of a substance so as to improve its handling properties, the ability to stabilize a labile substance, and the potential for reducing the safety hazards associated with dangerous substances during use. To take agrochemicals as an example, the advantages that will be offered by microencapsulating them may be summarized as follows. Needless to say, efficacy is of primary importance for agrochemicals, but from a practical viewpoint the dosage form of an agrochemical is no less important. By selecting an appropriate dosage form, safety for workers is enhanced, potential crop injury can be prevented, and the drug efficacy can be so controlled that it will work in either a sustained or delayed mode. Under these circumstances, active research efforts have been made to develop effective dosage forms of agrochemicals and microencapsulation, which is one of the accomplishments of these efforts, has recently attracted increasing interest. In microencapsulated agrochemicals, the active ingredient is coated with a membrane so as to not only raise the level of safety for the personnel applying them but also to enable slow release of the drug, thereby enabling more efficient and less labor-intensive application or spraying of the agrochemicals concerned.

Several methods have been proposed as techniques for microencapsulating agrochemicals. In one proposed method, a pyrethroid insecticide or an organophosphorus insecticide is microencapsulated with a polyurethane resin (see Japanese Patent Publication No. 53-38325 and Japanese Patent Public Disclosure No. 58-144304); in another method, a slightly water-soluble agrochemical is microencapsulated with polyurea formed by the interfacial reaction between a polyisocyanate solution and an aqueous polyamine solution (see Japanese Patent Public Disclosure No. 62-67003).

These and other techniques that have been proposed to date for encapsulating various ingredients share the following problems: a complicated separating process is necessary to isolate the microcapsules formed and this adds to the production cost of microcapsules; secondly, the active ingredient might ooze out of the isolated microcapsules during storage. Thus, many of the microcapsules produced by prior art techniques are not isolated and instead are used in the form of a slurry.

However, a slurry will still have problems such as the tendency of microcapsules to precipitate during storage or to become frozen at low temperatures. Other problems that might be encountered are disruption of microcapsules during manufacture and poor dispersibility of the microcapsules in the water used as a diluting medium.

US-A-3 577 515 discloses a process for encapsulation by interfacial polycondensation. Two non-miscible liquid phases are mixed with each other, the first phase containing a reactant or a group of reactants and being dispersed in the second phase which is free of reactants. Then the desired condensation reaction is effected by bringing together a second reactant with the second phase.

EP-A-0 148 769 discloses a process for producing polyurea microcapsules of multiple dimensions and the microcapsules prepared:
Water immiscible phases comprising water immiscible material to be encapsulated and an organic polyisocyanate are dispersed in an aqueous phase comprising a surfactant and a protective colloid. Then the dispersion is heated.

US-A-4 681 806 discloses a process for the preparation of spheres containing a releasable fill material. In the process a releasable fill material, an isocyanate and a matrix-forming co-reactant are dispersed in an aqueous medium.

A first portion of the isocyanate is hydrolysed to form a thin layer at the surface of said spheres, and a continuous polyurea matrix in the interiors of the spheres. A second portion of the isocyanate is reacted with said matrix-forming co-reactant to form additional matrix material in the interior of said spheres.

US-A-4 722 838 discloses a self-microencapsulating pesticidal composition which consists mainly of a polymeric barrier material in a special organic solvent, a dissolved or dispersed pesticidal agent and at least one surfactant. When the composition is added to water, small droplets are formed and the active pesticide is coated with the polymeric barrier material.

The present inventors wanted to refine the conventional techniques of microencapsulation and previously proposed that a composition prepared by intimately mixing an emulsifying agent and a compound capable of reacting with water to form a membrane (said compound is hereunder referred to as a membrane-forming compound) be added, just prior to use, to a solvent such as water together with an active ingredient or drug such as an agrochemical, thereby confining the latter in microcapsules.

The microencapsulating composition prepared by this method involves no problem as long as it is put to use immediately after preparation. However, if it is to be used after a certain period of storage, one must anticipate the problem that gelation and precipitation will occur during the storage. It also turned out that this composition would not become sufficiently emulsified in water or other media to accomplish effective microencapsulation.

The present inventors conducted further studies to solve the aforementioned problems and found that when an emulsifying agent and a membrane-forming compound are so modified that they will not react with each other or when combinations of an emulsifying agent and a membrane-forming compound that will not react with each other are selected, the resulting mixture will remain stable for an extended period and will allow microcapsules confining an active ingredient to be readily formed when it is added to a spray liquid. The present invention has been accomplished on the basis of this finding.

In one aspect, the present invention provides a microencapsulating composition based on two essential components, i.e., an emulsifying agent and a compound that will not react with said emulsifying agent and which is capable of reacting with water to form a membrane, wherein the emulsifying agent is an anionic surfactant, cationic surfactant, nonionic surfactant and/or an amphoteric surfactant which will not react with the compound capable of reacting with water to form a membrane, and wherein the compound capable of reacting with water to form a membrane is either a diisocyanate, polyisocyanate and/or a urethane prepolymer or a mixture of a ketimine and an epoxy resin or an alkyl α-cyanoacrylate.

In another aspect, the present invention provides a microencapsulating composition that contains as the essential components the first microencapsulating composition set forth above and a component to be microencapsulated. Just prior to use, this second microencapsulating composition is added to an appropriate amount of a liquid medium such as water and mixed with stirring to form microcapsules confining the component to be microencapsulated.

In still another aspect, the present invention provides a convenient process for producing microcapsules using the first microencapsulating composition described above, as well as a composition that comprises said first microencapsulating composition and a component to be microencapsulated as a combined product for use in microencapsulating the said component to be microencapsulated.

Examples of components that may be microencapsulated include agrochemicals, flavors, paints, liquid crystals, pest or mouse repellents, fertilizers, cosmetics, pigments, inks, attractants, foaming agents, flame retardants, corrosion inhibitors and mold inhibitors. These components are added, just prior to use, to a solvent such as water together with the first microencapsulating composition, and desired microcapsules confining these components can be obtained by simple procedures.

It is important for the purposes of the present invention that the emulsifying agent and membrane-forming compound used should not react with each other. To this end, it is necessary to select those combinations of an emulsifying agent and a membrane-forming compound which inherently will not react with each other, or in the case of reactive combinations, the groups that take part in reaction (i.e., reactive groups) must be preliminarily blocked by some chemical method.

Specific examples of the emulsifying agent and membrane-forming compound to be used in the present invention are described below.

### Emulsifying Agent

### (1) Anionic surfactant:

Any anionic surfactant that is commonly employed in emulsification may be used, such as: alkyl sulfates, polyoxyethylene alkyl ether sulfates, polyoxyethylene alkylallylether sulfates, polyoxyethylene-polyoxypropylene block polymer sulfates, alkane sulfonates, dialkyl sulfosuccinates, alkylallyl sulfonates, fatty acid salts, Turkey red oil, polyoxyethylene alkylether phosphates, polyoxyethylene alkylallylether phosphates and alkyl phosphates.

### (2) Cationic surfactant:

Illustrative cationic surfactants that may be used include: primary amine salts, secondary amine salts, tertiary amine salts, modified amine salts, tetraalkyl quaternary ammonium salts, modified trialkyl quaternary ammonium salts, trialkylbenzyl quaternary ammonium salts, modified trialkylbenzyl quaternary ammonium salts, alkylpyridinium salts, modified alkylpyridinium salts, alkylquinolinium salts, alkylphosphonium salts and alkylsulfonium salts.

### (3) Nonionic surfactant:

Illustrative nonionic surfactants that may be used include polyoxyethylene alkyl ethers, polyoxyethylene rosin esters, polyoxypropylene alkyl ethers, polyoxyethylene sorbitan fatty acid esters and polyoxyethylene styrylphenyl ethers. If necessary, these compounds may be chemically blocked by known methods at the terminal primary or secondary OH group in the polyoxyalkylene chain so that they will not react with the isocyanate group in the membrane-forming compound.

### (4) Amphoteric surfactant:

Illustrative amphoteric surfactants that may be used include lecithin, alkylaminocarboxylic acid salts, alkyldimethylbetaine and alkylhydroxyethylbetaine.

Various types of surfactants (1) - (4) may be used in combination. A preferred combination is a mixture of anioic and nonionic surfactants. The emulsifying agents listed above are used in amounts generally ranging from 1 to 50 parts by weight, preferably from 3 to 20 parts by weight.

### Membrane-Forming Compound

The membrane-forming compound to be used in the present invention is a compound that is capable of reacting with water to form a membrane and may be exemplified by the following:

### (1) Isocyanate compound:

Diisocyanates or polyisocyanates, or urethane prepolymers that are obtained by reacting diols or polyols with diisocyanates or polyisocyanates may be used either on their own or as admixtures.

Illustrative diisocyanates and polyisocyanates include: tolylene diisocyanate, diphenylmethane diisocyanate, naphthalene diisocyanate, tolidine diisocyanate, hexamethylene diisocyanate, isophorone diisocyanate, xylylene diisocyanate, hydrogenated diphenylmethane diisocyanate, modified diphenylmethane diisocyanate, triphenylmethane triisocyanate, undecanetriisocyanate, hexamethylene triisocyanate, lysine ester triisocyanate and polymethylene polyphenyl isocyanate.

Illustrative diols and polyols include: polyhydric alcohols such as ethylene glycol, propylene glycol, hexanediol, trimethylpropane, glycerin, pentaerythritol, sorbitol and sucrose; polyether polyols having an alkylene oxide such as ethylene oxide or propylene oxide added to these polyhydric alcohols; polyester polyols such as ethylene adipate, diethylene adipate and butylene adipate; as well as polycarbonate polyols, acrylic polyols and polybutadiene polyols.

### (2) Mixture of ketimine with epoxy resin:

A diamine resulting from the reaction between ketimine and water reacts with epoxy to form a polymer film.

### (3) Alkyl α-cyanoacrylate:

A polymer film forms as catalyzed by water.

Among the membrane-forming compounds (1) - (3), the isocyanate compounds (1) are particularly preferred.

If the emulsifying agent and membrane-forming compound selected are reactive with each other, the reactive group must be blocked by some method. If the reactive group is the terminal hydroxyl group of a nonionic surfactant, it may be blocked by any one of the known methods including (1) etherification, (2) esterification, (3) urethanation and (4) tertiary hydroxylation.

The etherification method (1) usually involves reacting a nonionic surfactant with an alkyl halide such as methylene chloride or methyl iodide. The esterification method (2) usually involves reacting a nonionic surfactant with a monocarboxylic acid such as acetic acid or propionic acid, a dicarboxylic acid such as oxalic acid, succinic acid, malonic acid, maleic acid or adipic acid, a tricarboxylic acid such as citric acid, or an acid anhydride of these carboxylic acids. The urethanation method (3) involves reacting a nonionic surfactant with a monoisocyanate such as methyl isocyanate, ethyl isocyanate, propyl isocyanate or phenyl isocyanate, or a polyisocyanate such as tolylene diisocyanate, xylylene diisocyanate, diphenylmethane diisocyanate, or triphenylmethane diisocyanate. The tertiary hydroxylation method (4) may be performed by adding isobutylene oxide to a nonionic surfactant.

Few surfactants other than nonionics (i.e., anionics, cationics and amphoterics) have reactive groups and salts having a hydroxyl group such as monoethanolamine salts are few exceptions; the hydroxyl group in these salts may be blocked by the methods described above or they may be converted to metal salts such as Na, K or Ca salts, or ammonium salts.

The emulsifying agent and the membrane-forming compound may be rendered non-reactive with each other if the latter compound is blocked. For instance, if the membrane-forming compound is a urethane prepolymer, it may be rendered non-reactive by a known method such as reacting the prepolymer with a blocking agent so that it is blocked. Illustrative blocking agents that may be used in this method include methanol, ethanol, phenol, ethyl mercaptant, hydrocyanic acid, diethyl malonate, ε-caprolactam, sodium bisulfite and acetylacetone. The urethane prepolymers blocked with these blocking agents will liberate the isocyanate group and restore the membrane-forming capability when heated to their respective cleavage temperature and above. Therefore, if the substance to be microencapsulated is not resistant to heat, the membrane-forming compound is preferably selected from among those which have low cleavage temperature.

The microencapsulating composition of the present invention may be produced by adding 0.05 - 100 parts by weight, preferably 0.5 - 10 parts by weight, of the emulsifying agent per part by weight of the membrane-forming compound and mixing them under stirring. Mixing under stirring may be performed with a commonly employed stirrer, and the mixing temperature may be a conventional one.

If the membrane-forming compound and emulsifying agent selected are too viscous, they may be mixed with an organic solvent that is added in an appropriate amount. Any organic solvent may be used as long as it dissolves an active ingredient (e.g. agrochemical), emulsifying agent and membrane-forming compound and will not react with the membrane-forming compound. Several examples are listed below: aliphatic hydrocarbons such as heptane, n-hexane, cyclohexane, octane and isooctane; halogenated hydrocarbons such as chloroform, carbon tetrachloride, trichloroethylene and benzene chloride; ketones such as isobutyl ketone, diethyl ketone, methyl ethyl ketone and dipropyl ketone; esters such as ethyl acetate, butyl acetate, isoamyl acetate and ethyl propionate; ethers such as butyl ether and isopropyl ether; aromatic hydrocarbons such as benzene, toluene, xylene and phenylxylylethane; as well as dimethylformamide and dimethyl sulfoxide.

If the substance to be microencapsulated is an agrochemical, the microencapsulating composition of the present invention may be used in the following way: a commercial agrochemical is purchased, added to a spray liquid together with the microencapsulating composition, and stirred to form microcapsules confining the commercial agrochemical; the resulting solution containing these microcapsules is sprayed with a spray apparatus.

In accordance with a second aspect of the present invention, a microencapsulating composition further containing a substance to be microencapsulated is provided. To produce this second microencapsulating composition, 0.05 - 100 parts by weight, preferably 0.5 - 20 parts by weight, of the membrane-forming compound and 0.05 - 50 parts by weight, preferably 0.5 - 10 parts by weight, of the emulsifying agent are added to one part by weight of the component to be microencapsulated, say, an agrochemically active ingredient, and the respective components are mixed under stirring. Mixing under stirring may be performed with a commonly employed stirrer, and the mixing temperature may be a conventional one.

Any substance may be microencapsulated so long as it will not react with the membrane-forming compound. Thus, an appropriate agrochemically active ingredient may be selected from among herbicides, bactericides, insecticides and plant growth regulating agents.

It is speculated that microcapsules are formed by the following mechanism when the microencapsulating composition of the present invention is used. First, a spray solution of an agrichemocal is prepared by a conventional method. When the microencapsulating composition of the present invention is added to the spray solution, the composition is emulsified and dispersed as tiny droplets not larger than a few microns in the spray solution. Then, these tiny droplets of the composition will coalesce with the droplets or particles in the spray solution that contain the agrochemically active ingredient. Thus, new liquid droplets will form that contain both the agrochemically active ingredient and the membrane-forming compound and a membrane is formed at the interface between the newly formed liquid droplets and water, thereby generating microcapsules containing the agrochemically active ingredient.

The microencapsulating composition of the present invention is generally added in an amount of 0.02 - 10% (v/v), preferably 0.05 - 2% (v/v), of the spray solution containing the component to be microencapsulated.

The thickness of the wall of microcapsules is adjustable by changing the amount of membrane-forming compound incorporated or the amount of the microencapsulating composition of the present invention added.

When an isocyanate based compound is used as the membrane-forming compound in the present invention, the rate at which the wall of microcapsules is formed in diluting water may be accelerated with a catalyst. The catalyst may be preliminarily incorporated in the microencapsulating composition or it may be added to water to which the microencapsulating composition is added to form microcapsules. In the case of an agrochemical microencapsulating composition, the catalyst may be incorporated either in that composition or in a solvent to which the composition is added to form agrochemical-containing microcapsules.

The membrane-forming rate can be adjusted by changing the amount of catalyst added (see Example 25 to be described hereinafter). The catalyst is usually added in an amount ranging from 0.1 to 10 wt% of the microencapsulating composition. Illustrative catalysts that may be used to accelerate the membrane-forming rate include amines such as triethylamine, N,N,N,N-tetramethyl-1,3-butanediamine, lauryldimethylamine and triethylenediamine, and organotin compounds such as dibutyltin dilaurate, dibutyltin-di(2-ethylhexoate) and stannous oleate. These catalysts may be used either on their own or as admixtures.

If a urethane prepolymer is used as the membrane-forming compound, the membrane-forming rate can also be adjusted by changing the hydrophilic-lipophilic balance (HLB) of the urethane prepolymer (see Example 24 to be given hereinafter).

The present invention offers the following many advantages. The microencapsulating composition according to its first aspect is suitable for long-term storage and microcapsules containing a component to be microencapsulated can be readily formed by merely adding said component and composition to water or some other liquid medium just prior to use. The liquid preparation containing these microcapsules is ready for immediate use. According to the second aspect of the present invention, a microencapsulating composition which additionally contains a component to be microencapsulated, for example, an agrochemical is provided (i.e., an agrochemical microencapsulating composition), and this second microencapsulating composition is suitable for long-term storage as in the case of the first microencapsulating composition. Furthermore, an agrochemical microcapsule preparation containing an agrochemically active ingredient can be readily formed by merely adding said second composition to a liquid spray medium, and the resulting spray solution is ready for immediate application. Thus, the agrochemical microcapsule preparation of the present invention offers the advantage that it fulfills the previously recognized need for the spraying of agrochemicals in a safe, efficient and labor-saving fashion.

The present invention is hereinafter described in greater detail with reference to Examples and Comparative Examples. It should, however, be noted that these examples are intended for illustrative purposes only and should not be taken as limiting the scope of the present invention.

In the Examples and Comparative Examples, the following test methods were used.

### Storage Stability Test:

A microencapsulating composition was examined visually in the as-prepared state and after storage at 40°C for 1 week or 3 months. A sample that was free from coloration, precipitation and gelation was rated "good".

### Emulsion Stability Test:

Part of the microencapsulating composition to be subjected to the storage stability test was diluted 1,000 times with hard water (hardness scale 3) at 20°C and the stability of the resulting emulsion was evaluated visually after the passage of 2 hours.

### Quantitative Determination of Isocyanate Groups:

A solution of 0.1 N di-n-butylamine in acetone was prepared. A portion (25 mℓ) of the solution was charged into a conical flask, to which a 1,000-fold dilution of a microencapsulating composition of the present invention was added in an amount of exactly 10 g. After standing for 20 minutes at room temperature, 100 mℓ of isopropyl alcohol was added and titration with 0.1 N HCl was conducted with Bromophenol Blue being used as an indicator. The proportion of the unreacted isocyanate groups was calculated and the percent reactivity of the isocyanate groups was determined on the basis of the calculation.

All the "parts" in which the respective components used in the Examples and Comparative Examples are expressed are "parts by weight".

### Example 1

Ten parts of an emulsifying agent consisting of 50 parts of an acetate of polyoxyethylene distyrylphenol ether (17.5 mol ethylene oxide added) and 50 parts of calcium dodecylbenzenesulfonate, 70 parts of Polygrout O-1 (urethane prepolymer produced by Daiichi Kogyo Seiyaku Co., Ltd.) and 20 parts of xylene were mixed under stirring to prepare a microencapsulating composition (which is abbreviated hereinafter as a "composition").

### Example 2

Ten parts of an emulsifying agent consisting of 50 parts of an acetate of polyoxyethylene distyrylphenol ether (17.5 mol ethylene oxide added) and 50 parts of calcium dodecylbenzenesulfonate, 50 parts of Polygrout O-1 and 40 parts of xylene were mixed under agitation to prepare a composition.

### Example 3

Ten parts of an emulsifying agent consisting of 50 parts of an acetate of polyoxyethylene distyrylphenol ether (17.5 mol ethylene oxide added) and 50 parts of calcium dodecylbenzenesulfonate, 20 parts of Polygrout O-1 and 70 parts of xylene were mixed under agitation to prepare a composition.

### Comparative Example 1

Ten parts of an emulsifying agent consisting of 50 parts of polyoxyethylene distyrylphenol ether not blocked at the terminal (17.5 mol ethylene oxide added) and 50 parts of calcium dodecylbenzenesulfonate, 20 parts of Polygrout O-1 and 70 parts of xylene were mixed under agitation to prepare a composition.

This composition and those which were prepared in Examples 1 - 3 were subjected to a storage stability test and an emulsion stability test. The results are shown in Table 1.

**Table 1**

| | | As prepared | 1 week | 3 months |
|---|---|---|---|---|
| Ex. 1 | storage stability | O | O | O |
| | emulsion stability | O | O | O |
| Ex. 2 | storage stability | O | O | O |
| | emulsion stability | O | O | O |
| Ex. 3 | storage stability | O | O | O |
| | emulsion stability | O | O | O |
| Comp. Ex. 1 | storage stability | O | white precipitate formed | white precipitate formed |
| | emulsion stability | O | X | X |
| O: good X: poor | | | | |

As is clear from Table 1, the compositions prepared in Examples 1 - 3 were stable but in the composition of Comparative Example 1 which used a nonionic surfactant whose terminal group was not blocked, said surfactant reacted with the urethane prepolymer to cause not only precipitation but also marked reduction in emulsion stability.

### Example 4

A commercial pyridaphenthion emulsion (Ofunack R Emulsion produced by Mitsui Toatsu Chemical, Inc.) was diluted 500 fold with water. To the resulting dilution, each of the compositions prepared in Examples 1 - 3 and Comparative Example 1 was added in an amount of 0.1% (v/v) after storage at 40°C for 3 months, and mixed under stirring to prepare diluted compositions. Aluminum disks (7 cm in dia.) were submerged in the diluted compositions for 1 minute. The recovered disks were dried and placed in a thermostatic chamber at 30°C, where they were stored for a predetermined period. Thereafter, the disk were taken out of the thermostatic chamber and the amount of pyridaphenthion adhering to the disks was measured by gas chromatography. The residual amount of pyridaphenthion was determined in terms of relative value, with the value measured right after immersion being taken as 100. If the compositions prepared in Examples 1 - 3 were in the form of microcapsules confining pyridaphenthion, the compound would be released from the capsules according to their disintegration rate, causing a gradual decrease in the residual amount of the compound. Therefore, the residual amount of pyridaphenthion will serve as an index for the formation of microcapsules. The results are shown in Table 2.

**Table 2**

| | As immersed | 3 days | 6 days | 10 days |
|---|---|---|---|---|
| Example 1 | 100% | 95 | 71 | 45 |
| Example 2 | 100 | 88 | 60 | 33 |
| Example 3 | 100 | 85 | 52 | 30 |
| Comparative Example 1 | 100 | 60 | 10 | 0 |

The data given in Table 2 to show the residual effect of the insecticide (pyridaphenthion) makes it clear that the microencapsulating compositions prepared in accordance with the present invention successfully microencapsulated a commercial insecticide.

### Example 5

Orange oil used as a flavor was added to a 0.1% (v/v) aqueous solution of Tween 20 to form a suspension at a concentration of 5% (v/v). A composition prepared as in Example 1 was weighed in the same volume as that of the orange oil and mixed with the suspension under stirring, thereby forming a suspension of microcapsules confining the orange oil.

### Example 6

4-Bromo-bisphenol used as a flame-retardant was added to a 0.1% (v/v) aqueous solution of Tween 20 to form a suspension at a concentration of 10% (v/v). A composition prepared as in Example 1 was weighed in the same volume as that of the 4-bromo-bisphenol and mixed with the suspension under stirring, thereby forming a suspension of microcapsules confining 4-bromo-bisphenol.

### Example 7

Forty parts of pyridaphenthion, 10 parts of an emulsifying agent consisting of 50 parts of an acetate of polyoxyethylene distyrylphenol ether (25 mol ethylene oxide added) and 50 parts of calcium dodecylbenzenesulfonate, 10 parts of Dikssol MG 100 (urethane prepolymer produced by Daiichi Kogyo Seiyaku Co,. Ltd.) and 40 parts of xylene were mixed under stirring to prepare a composition.

### Example 8

Forty parts of pyridaphenthion, 10 parts of an emulsifying agent consisting of 50 parts of an acetate of polyoxyethylene distyrylphenol ether (25 mol ethylene oxide added) and 50 parts of calcium dodecylbenzenesulfonate, 5 parts of Dikssol MG 100 and 45 parts of xylene were mixed under stirring to prepare a composition.

### Example 9

Forty parts of pyridaphenthion, 10 parts of an emulsifying agent consisting of 50 parts of an acetate of polyoxyethylene distyrylphenol ether (25 mol ethylene oxide added) and 50 parts of calcium dodecylbenzenesulfonate, 3 parts of Dikssol MG 100, and 47 parts of xylene were mixed under stirring to prepare a composition.

### Comparative Example 2

Forty parts of pyridaphenthion, 10 parts of an emulsifying agent consisting of 50 parts of polyoxyethylene distyrylphenol ether not blocked at the terminal (25 mol ethylene oxide added), 3 parts of Dikssol MG 100, and 47 parts of xylene were mixed under stirring to prepare a composition.

This composition and those which were prepared in Examples 7 - 9 were subjected to a storage stability test and an emulsion stability test. The results are shown in Table 3.

**Table 3**

| | | As prepared | 1 week | 3 months |
|---|---|---|---|---|
| Ex. 7 | storage stability | O | O | O |
| | emulsion stability | O | O | O |
| Ex. 8 | storage stability | O | O | O |
| | emulsion stability | O | O | O |
| Ex. 9 | storage stability | O | O | O |
| | emulsion stability | O | O | O |
| Comp. Ex. 2 | storage stability | O | white precipitate formed | white precipitate formed |
| | emulsion stability | O | X | X |
| O: good X: poor | | | | |

As is clear from Table 3, the compositions prepared in Examples 7 - 9 were stable but in the composition of Comparative Example 2 which used a nonionic surfactant whose terminal group was not blocked, said surfactant reacted with the urethane prepolymer to cause not only precipitation but also marked reduction in emulsion stability.

### Example 10

Compositions that were prepared as in Examples 7 - 9 were stored at 40°C for 3 months and thereafter diluted 1000 fold. For each of the diluted compositions, the residual amount of pyridaphenthion was determined as in Example 4. The results are shown in Table 4.

**Table 4**

| | As immersed | 3 days | 6 days | 10 days |
|---|---|---|---|---|
| Example 7 | 100% | 92 | 60 | 43 |
| Example 8 | 100 | 86 | 55 | 26 |
| Example 9 | 100 | 83 | 50 | 33 |
| Comparative Example 2 | 100 | 67 | 14 | 0 |

The data in Table 4 shows that even after long-term storage, the compositions of the present invention successfully provided drug-containing microcapsule preparations on being mixed with diluent water alone just prior to use.

### Example 11

Four parts of a polynactin complex, 10 parts of an emulsifying agent consisting of 50 parts of an acetate of polyoxyethylene nonylphenol ether (30 mol ethylene oxide added) and 50 parts of calcium dodecylbenzenesulfonate, 10 parts of Dikssol MD 100 (urethane prepolymer produced by Daiichi Kogyo Seiyaku Co., Ltd.), 0.2 parts of N-lauroylglutamic acid dibutylamide, and 69.8 parts of machine oil were mixed under stirring to prepare a composition in the form of a suspension. When subjected to the same tests as in Comparative Example 1, this composition showed good results in terms of both storage stability and emulsion stability.

### Experiment

Half a part of Azoic Diazo Component 22 (Kako Blue VR Salt produced by Showa Chemical Co., Ltd.), 10 parts of an emulsifying agent consisting of 50 parts of an acetate ester of polyoxyethylene nonylphenol ether (20 mol ethylene oxide added) and 50 parts of calcium dodecylbenzenesulfonate, 10 parts of Dikssol MG 100, and 79.5 parts of xylene were mixed under stirring to prepare a liquid composition. In a separate step, 0.5 parts of β-naphthol (product of Wako Pure Chemical Industries, Ltd.), 10 parts of an emulsifying agent consisting of 50 parts of an acetate ester of polyoxyethylene nonylphenol ether (20 mol ethylene oxide added) and 50 parts of calcium dodecylbenzenesulfonate, and 89.5 parts of xylene were mixed under stirring to prepare a composition. One milliliter each of the two compositions was added to 1,000 mℓ of hard water (hardness scale 3) at 20°C and stirred. Fifteen minutes later, the emulsion in the diluted mixture turned red. This means that Azoic Diazo Component 22 and β-naphthol in the two compositions reacted with each other, and provides an indirect proof of the fact that the two emulsions coalesced in water to form microcapsules confining the active ingredients.

### Example 12

### Preparation of a composition capable of simple production of a microcapsule preparation confining as the main component soybean oil useful as an enamel remover:

Eighty parts of soybean oil (main component), 10 parts of an emulsifying agent consisting of 50 parts of an acetate of polyoxyethylene distyrylphenol ether (25 mol ethylene oxide added) and 50 parts of calcium dodecylbenzenesulfonate, and 10 parts of Dikssol MG 100 were mixed under stirring to prepare a composition.

### Example 13

### Preparation of a composition capable of simple production of a microcapsule preparation confining as the main component rutile titanium dioxide having improved fluidity and being useful as a pigment:

A composition was prepared as in Example 12 except that rutile titanium dioxide was used as the main component.

### Example 14

### Preparation of a composition capable of simple production of a microcapsule preparation confining as the main component citronella which is useful as a flavor:

A composition was prepared as in Example 12 except that citronella was used as the main component.

### Example 15

### Preparation of a composition capable of simple production of a microcapsule preparation confining as the main component 4-bromo-ethane having improved masking property and being useful as a flame-retardant:

A composition was prepared as in Example 12 except that 4-bromo-ethane was used as the main component.

### Example 16

### Preparation of a composition capable of simple production of a microcapsule preparation confining as the main component a cholesteric liquid crystal useful in liquid-crystal printing:

A composition was prepared as in Example 12 except that a cholesteric liquid crystal consisting of 20 parts of cholesterin chloride and 80 parts of cholesterin nonanoate was used as the main component.

### Testing

The compositions prepared in Examples 12 - 16 were subjected to the same tests as in Comparative Example 1 and the results were satisfactory with all samples in terms of both storage stability and emulsion stability.

### Example 17

Twelve parts of a polynactin complex, 10 parts of an emulsifying agent composed of 50 parts of an acetate of polyoxyethylene distyrylphenol ether (35 mol ethylene oxide added) and 50 parts of calcium dodecylbenzenesulfonate, 10 parts of Polygrout O-1, and 68 parts of benzene chloride were mixed under stirring to prepare a composition. The results of a storage stability test and an emulsion stability test conducted on this composition are shown in Table 5.

### Comparative Example 3

A composition was prepared as in Example 17 except that a mixture consisting of 50 parts of polyoxyethylene distyrylphenol ether not blocked at the terminal (35 mol ethylene oxide added) and 50 parts of calcium dodecylbenzenesulfonate was used as an emulsifying agent. The results of a storage stability test and an emulsion stability test conducted on this composition are shown in Table 5.

**Table 5**

| | | As prepared | 1 week | 3 months |
|---|---|---|---|---|
| Ex. 17 | storage stability | O | O | O |
| | emulsion stability | O | O | O |
| Comp. Ex. 3 | storage stability | O | white precipitate formed | white precipitate formed |
| | emulsion stability | O | X | X |
| O: good X: poor | | | | |

As is clear from Table 5, the composition prepared in Example 17 was stable but in the composition of Comparative Example 3 which used a nonionic surfactant whose terminal was not blocked, said surfactant reacted with the urethane prepolymer to cause not only precipitation but also marked reduction in emulsion stability.

### Example 18

Two parts of etofenplocks, 10 parts of an emulsifying agent consisting of 50 parts of methyl ether of polyoxyethylene nonylphenol ether (15 mol ethylene oxide added) and 50 parts of calcium dodecylbenzenesulfonate, 15 parts of Polygrout O-3 (urethane prepolymer produced by Daiichi Kogyo Seiyaku Co., Ltd.) and 73 parts of xylene were mixed under stirring to prepare a composition. This composition was subjected to a storage stability test and an emulsion stability test and the results were satisfactory both in the as-prepared state and after storage for either 1 week or 3 months.

### Example 19

Forty parts of pyridaphenthion, 10 parts of an emulsifying agent consisting of 50 parts of an acetate of polyoxyethylene distyrylphenol ether (35 mol ethylene oxide added) and calcium dodecylbenzenesulfonate, 10 parts of tolylene diisocyanate and 40 parts of xylene were mixed under stirring to prepare a composition. The results of a storage stability test and an emulsion stability test conducted on this composition are shown in Table 6.

### Comparative Example 4

A composition was prepared as in Example 19 except that a mixture consisting of 50 parts of polyoxyethylene distyrylphenol ether not blocked at the terminal (35 mol ethylene oxide added) and 50 parts of calcium dodecylbenzenesulfonate was used as an emulsifying agent. The results of a storage test and an emulsion test conducted on this composition are shown in Table 6.

**Table 6**

| | | As prepared | 1 week | 3 months |
|---|---|---|---|---|
| Ex. 19 | storage stability | O | O | O |
| | emulsion stability | O | O | O |
| Comp. Ex. 4 | storage stability | O | white precipitate formed | white precipitate formed |
| | emulsion stability | O | X | X |
| O: good X: poor | | | | |

As is clear from Table 6, the composition of Example 19 was stable but in the composition of Comparative Example 4, the nonionic surfactant reacted with tolylene diisocyanate, causing not only precipitation but also marked reduction in emulsion stability.

### Example 20

Forty parts of tripropyl isocyanate (TPIC), 10 parts of an isobutylene oxide adduct of polyoxyethylene nonylphenol ether (10 mol ethylene oxide added), 15 parts of 1,4-butane diisocyanate and 35 parts of kerosene were mixed under stirring to prepare a composition. This composition showed satisfactory storage stability and emulsion stability.

### Example 21

Fifty parts of dichlorvos, 5 parts of ethyl cyanoacrylate, 10 parts of an acetate of polyoxyethylenebenzylphenol ether (30 mol ethylene oxide added) and 35 parts of xylene were mixed under stirring to prepare a composition. This composition showed satisfactory storage stability and emulsion stability.

### Example 22

Ten parts of oxadiazon, 3 parts of ketimine obtained by reacting ethylenediamine with acetone, 6 parts of epoxy resin (diglycidyl ether of bisphenol A), 10 parts of an emulsifying agent consisting of 50 parts of an acetate ester of polyoxyethylene distyrylphenol ether (35 mol ethylene oxide added) and 50 parts of calcium dodecylbenzenesulfonate, and 71 parts of xylene were mixed under stirring to prepare a composition.

This composition showed satisfactory storage stability and emulsion stability.

### Example 23

Forty parts of diazinon, 20 parts of an emulsifying agent consisting of 50 parts of methyl ether of polyoxyethylated castor oil (50 mol ethylene oxide added) and 50 parts of calcium dodecylbenzenesulfonate, 10 parts of Monotac (urethane prepolymer produced by Daiichi Kogyo Seiyaku Co., Ltd.) and 30 parts of a solvent system composed of 50 parts of xylene and 50 parts of benzene chloride were mixed under stirring to prepare a composition. This composition was subjected to a storage stability test and an emulsion stability test and the results were satisfactory both in the as-prepared state and after storage for 1 week or 3 months.

After the passage of 3 months at room temperature, the percent reactivity of isocyanate groups was determined at given intervals by the method already described for estimating the membrane-forming speed of microcapsules.

The results of measurements of the percent reactivity of isocyanate groups are shown in Table 7.

**Table 7**

| | | | | |
|---|---|---|---|---|
| Time passed (min) | 0 | 5 | 15 | 30 |
| Reactivity (%) | 0 | 10 | 44 | 92 |

The data in Table 7 and examination under electron microscope showed that when the microencapsulating composition of the present invention was diluted with water, the membrane-forming compound reacted with water to form microcapsules.

### Example 24

Eight parts of tetradifon, 20 parts of an emulsifying agent consisting of 50 parts of an acetate of polyoxyethylene distyrylphenol (25 mol ethylene oxide added) and 50 parts of calcium dodecylbenzenesulfonate, 10 parts of Polygrout W-1 (hydrophilic urethane prepolymer produced by Daiichi Kogyo Seiyaku Co., Ltd.) and 62 parts of xylene were mixed under stirring to prepare a composition. The percent reactivity of isocyanate groups in this composition was measured as in Example 23 to estimate the membrane-forming speed of microcapsules. The results are shown in Table 8.

**Table 8**

| | | | | |
|---|---|---|---|---|
| Time passed (min) | 0 | 5 | 15 | 30 |
| Reactivity (%) | 0 | 66 | 100 | 100 |

Obviously, the composition of Example 24 enabled membrane formation at a faster rate than the composition of Example 23. This suggests the possibility of accelerating membrane formation by using a more hydrophilic urethane prepolymer as the membrane-forming compound. In other words, the membrane-forming speed can be adjusted by changing the hydrophilic-lipophilic balance (HLB) of the urethane prepolymer. The composition of Example 24 was satisfactory in terms of both storage stability and emulsion stability.

### Example 25

Forty parts of glyphosate, 10 part of an emulsifying agent consisting of 50 parts of the methyl urethanated product of polyoxyethylene distyrylphenol ether (15 mol ethylene oxide added) and 50 parts of calcium dodecylbenzenesulfonate, 10 parts of a urethane prepolymer formed by reaction between polyoxypropylene glycerin ether and hexamethylene diisocyanate, 0, 0.1, 1 or 5 parts of dibutyltin dilaurate (catalyst), and xylene to make a total amount of 100 parts were mixed under stirring to prepare four kinds of composition having the catalyst added in varying amounts.

In order to estimate the membrane-forming speed of microcapsules for each composition, the percent reactivity of isocyanate groups was measured by the same method as employed in Example 23. The results are shown in Table 9.

**Table 9**

| | Amount of catalyst (%) | Time passed (min) | | | |
|---|---|---|---|---|---|
| | | 0 | 5 | 15 | 30 |
| Reactivity (%) | 0 | 0 | 5 | 14 | 25 |
| | 0.1 | 0 | 24 | 50 | 82 |
| | 1 | 0 | 54 | 85 | 89 |
| | 5 | 0 | 83 | 95 | 100 |

As is clear from Table 9, the membrane-forming speed of microcapsules can be adjusted by changing the amount of catalyst added.

Examination under electron microscope showed that satisfactory microcapsules had been generated from the four compositions of interest. The results of a storage stability test and an emulsion stability test conducted on these compositions were satisfactory both in the as-prepared state and after storage for 1 week or 3 months.

### Example 26

Twenty parts of triadimefon, 20 parts of diphenylmethane diisocyanate, 1 part of lauryl dimethylamine (catalyst), 10 parts of dimethylformamide, 5, 10 or 20 parts of an emulsifying agent consisting of 50 parts of a propionate of polyoxyethylene tristyrylphenol ether (25 mol ethylene oxide added) and 50 parts of calcium dodecylbenzenesulfonate, and xylene to make a total amount of 100 parts were mixed under stirring to prepare three kinds of composition having the emulsifying agent added in varying amounts. Each of these compositions was diluted 1,000 folds with water and emulsified at 25°C. Thirty minutes later, the resulting microcapsules were examined under electron microscope and their average particle size was investigated. The results are shown in Table 10.

**Table 10**

| Amount of emulsifying agent (%) | Average particle size (µm) |
|---|---|
| 5 | 15 |
| 10 | 3 |
| 20 | 1 |

The above results show that the higher the content of the emulsifying agent, the smaller the particle size of the microcapsules produced.

The results of a storage stability test and an emulsion stability test conducted on the three compositions of interest were satisfactory both in the as-prepared state and after storage for 1 week or 3 months.

### Use

Ten grams of the composition prepared in Example 24 was added to 10 ℓ of water and stirred. After being allowed to stand for ca. 15 minutes, the suspension of microcapsules was charged into a commercial stainless steel shoulder sprayer and sprayed in an adequate amount over cabbage seedlings potted in a greenhouse. No clogging occurred during the application and the coverage and wetting of cabbage with the applied suspension was satisfactory.

## Claims

1. A microencapsulating composition based on the two essential components: an emulsifying agent and a compound capable of reacting with water to form a membrane but not reactive with said emulsifying agent, wherein the emulsifying agent is an anionic surfactant, cationic surfactant, nonionic surfactant and/or an amphoteric surfactant which will not react with the compound capable of reacting with water to form a membrane and wherein the compound capable of reacting with water to form a membrane is either a diisocyanate, polyisocyanate and/or a urethane prepolymer or a mixture of a ketimine and an epoxy resin or an alkyl α-cyanoacrylate.

2. A microencapsulating composition containing as the essential components the microencapsulating composition of Claim 1 and a component to be microencapsulated.

3. A microencapsulating composition according to Claim 1 or 2 wherein the emulsifying agent is such that a reactive group present in it which can react with the compound capable of reacting with water to form a membrane is blocked.

4. A microencapsulating composition according to any one of Claims 2 - 3 wherein the component to be microencapsulated is an agrochemical, flavor, paint, liquid crystal, repellent, fertilizer, cosmetic, pigment, ink, attractant, foaming agent, flame retardant, corrosion inhibitor and/or a mold inhibitor.

5. A process for producing microcapsules by mixing under stirring a composition containing a component to be microencapsulated and a microencapsulating composition according to Claims 1, 3 or 4.

6. A composition containing a component to be microencapsulated and a microencapsulating composition according to Claims 1, 3 or 4 as a combined product for use in microencapsulating the said component to be microencapsulated.

## Patentansprüche

1. Zusammensetzung zum Mikroverkapseln auf der Grundlage von den zwei wesentlichen Komponenten: einem Emulgiermittel und einer Verbindung, die mit Wasser unter Bildung einer Membran reagieren kann, die jedoch nicht mit dem Emulgiermittel reagiert, in der das Emulgiermittel ein anionisches oberflächenaktives Mittel, ein kationisches oberflächenaktives Mittel, ein nichtionisches oberflächenaktives Mittel und/oder ein amphoteres oberflächenaktives Mittel ist, das nicht mit der Verbindung, die mit Wasser unter Bildung einer Membran reagieren kann, reagiert und in der die Verbindung, die mit Wasser unter Bildung einer Membran reagieren kann, entweder ein Diisocyanat, ein Polyisocyanat und/oder ein Urethan-Vorpolymer oder ein Gemisch eines Ketimins und eines Epoxyharzes oder ein α-Cyanoacrylsäurealkylester ist

2. Zusammensetzung zum Mikroverkapseln, die als wesentliche Bestandteile die Zusammensetzung zum Mikroverkapseln gemäß Anspruch 1 und eine Komponente, die mikroverkapselt werden soll, enthält.

3. Zusammensetzung zum Mikroverkapseln gemäß Anspruch 1 oder 2, in der eine reaktive Gruppe, die im Emulgiermittel vorhanden ist, und die mit der Verbindung reagieren kann, die mit Wasser unter Bildung einer Membran reagieren kann, blockiert ist.

4. Zusammensetzung zum Mikroverkapseln gemäß einem der Ansprüche 2 bis 3, in der die Komponente, die mikroverkapselt werden soll, ein agrochemisches Mittel, ein Duftstoff, eine Farbe, ein Flüssigkristall, ein Repellent, ein Düngemittel, ein kosmetisches Mittel, ein Pigment, eine Tinte, ein Lockstoff, ein Schäumungsmittel, ein flammenhemmendes Mittel, ein Korrosionsinhibitor und/oder ein Schimmelinhibitor ist.

5. Verfahren zum Herstellen von Mikrokapseln durch Mischen einer Zusammensetzung unter Rühren, die eine Komponente, die mikroverkapselt werden soll, und eine Zusammensetzung zum Mikroverkapseln, gemäß den Ansprüchen 1, 3 oder 4, enthält.

6. Zusammensetzung, die eine Komponente, die mikroverkapselt werden soll, und eine Zusammensetzung zum Mikroverkapseln gemäß den Ansprüchen 1, 3 oder 4, als kombiniertes Produkt zur Verwendung beim Mikroverkapseln der Komponente, die mikroverkapselt werden soll, enthält.

## Revendications

1. Composition de microencapsulage à base des deux composants essentiels : un agent émulsionnant et un composé capable de réagir avec l'eau pour former une membrane, mais non réactif avec ledit agent émulsionnant, dans laquelle l'agent émulsionnant est un agent tensio-actif anionique, un agent tensio-actif cationique, un agent tensio-actif non ionique et/ou un agent tensio-actif amphotère qui ne réagit pas avec le composé capable de réagir avec l'eau pour former une membrane et dans laquelle le composé capable de réagir avec l'eau pour former une membrane est soit un diisocyanate, un polyisocyanate et/ou un prépolyuréthanne, soit un mélange d'une cétimine et d'une résine époxy, soit un α-cyano-acrylate d'alkyle.

2. Composition de microencapsulage contenant comme composants essentiels la composition de microencapsulage de la revendication 1 et un composant à microencapsuler.

3. Composition de microencapsulage selon la revendication 1 ou 2, dans laquelle l'agent émulsionnant est tel qu'un groupe réactif qu'il contient et qui peut réagir avec le composé capable de réagir avec l'eau pour former une membrane est protégé.

4. Composition de microencapsulage selon l'une quelconque des revendications 2 et 3, dans laquelle le composant à microencapsuler est un produit agrochimique, un parfum, une peinture, un cristal liquide, un répulsif, un engrais, un cosmétique, un pigment, une encre, un appât, un agent moussant, un retardateur de flamme, un inhibiteur de corrosion et/ou un inhibiteur de moisissures.

5. Procédé de production de microcapsules par mélange sous agitation d une composition contenant un composant à microencapsuler et une composition de microencapsulage selon la revendication 1, 3 ou 4.

6. Composition contenant un composant à microencapsuler et une composition de microencapsulage selon la revendication 1, 3 ou 4, sous forme d'un produit combiné à utiliser dans le microencapsulage dudit composant à microencapsuler.
